# EUROPEAN PATENT SPECIFICATION

(11) **EP 1 625 066 B1**
(45) Date of publication and mention of the grant of the patent: **28.03.2007**
(21) Application number: 04733905.6
(22) Date of filing: 19.05.2004
(51) Int. Cl.: B62D 13/02

(54) **PNEUMATIC CYLINDER DEVICE FOR TRAILER OR SEMITRAILER VEHICLES**
PNEUMATISCHER ZYLINDER FÜR FAHRZEUGE MIT ANHÄNGER
DISPOSITIF DE CYLINDRE PNEUMATIQUE POUR VEHICULE REMORQUE OU SEMI-REMORQUE

(30) Priority: 19.05.2003 IT VR20030061
(43) Date of publication of application: 15.02.2006
(73) Proprietor: H.T.S. Hydro Tech Systems S.R.L., 40010 Sala Bolognese (IT)
(72) Inventor: BIONDI, Armando, I-40010 Sala Bolognese (IT); MARTINI, Paolo, I-37127 Avesa (IT)
(74) Representative: Petraz, Gilberto Luigi
(86) International application number: PCT/IT2004/000288
(87) International publication number: WO 2004/101347

(56) References cited:
- EP-A- 0 678 440
- CH-A- 400 789

## Description

### TECHNICAL FIELD

The present invention relates to a pneumatic cylinder device for trailer or semitrailer vehicles which, according to the angle of rotation between the truck and the semi-trailer or between the tractor and the trailer, assumes an angular position which transmits the command for power assisted steering of the wheels on the steering or self-steering axle of the respective semi-trailer or trailer.

More particularly, the present invention related to a pneumatic cylinder device which has a structure that overcomes the problem of limited space typical of the fifth wheel coupling operating zone on the semi-trailer or the towing hitch on the trailer and is such that it can be connected on the semi-trailer or the trailer and connected, at will, using a quick coupling, to the truck's fifth wheel coupling or to the tractor's hitch and inserted in hydraulic or electrical applications such as wheel steering on one or more steering or self-steering axles of articulated vehicles consisting of a truck or tractor which tows the semi-trailer or trailer.

The invention is mainly applied in the engineering industry, agriculture and transport.

### BACKGROUND ART

It is known that an articulated vehicle consisting of a truck or tractor towing a semi-trailer or trailer uses, on the latter, one or two self-steering axles to allow greater manoeuvrability when the articulated vehicle is moving forward.

For articulated vehicle steering while reversing the self-steering axle is locked with the wheels in the straight driving position to avoid the wheels, if they were free to turn, from positioning themselves at an angle and so preventing the articulated vehicle from reversing.

The self-steering axle is fitted with a mechanical - pneumatic or mechanical - hydraulic locking device, normally consisting of a pin which goes into a hole, holding the wheels in the non-steering condition, activated automatically or deliberately by the driver when reverse gear is selected.

Solutions relating to steering self-steering axles with controlled reversing on articulated vehicles have already been proposed. See for example the CH 400 789 and the Italian patent application BO94A000174 and European patent application-EP-A-678440 in which the electronic device which detects the angle of rotation between the truck and semi-trailer is of the encoder or potentiometric transducer type, incorporated in the semi-trailer towing pin.

This device may be applied to articulated vehicles consisting of a tractor which tows a semi-trailer, connected to one another by a fifth wheel coupling which is integral with the tractor, designed to receive a pin mounted on the semi-trailer.

This type of solution places delicate electronic components in a very dirty area covered by a mixture of mud, water and grease, and weakens the towing pin on the semi-trailer, towed by the fifth wheel coupling, considered a vehicle safety part.

### DISCLOSURE OF THE INVENTION

The present invention proposes to make available a pneumatic cylinder device for articulated vehicles which can overcome or significantly reduce the above-mentioned disadvantages.

More specifically, the present invention proposes to provide a pneumatic cylinder device for articulated vehicles which, according to the angle of rotation between the truck or, respectively, the tractor and the semi-trailer or, respectively, the trailer, can transmit the command for power assisted steering of the wheels on the axle of the semi-trailer or, respectively, the trailer.

Another aim of the present invention is to provide a pneumatic cylinder device which can be positioned on the semi-trailer or the trailer, which is fitted not only with the controlled axle but with all the rest of the articulated vehicle hydraulic or electrical steering circuit.

A further aim of the present invention is to provide a pneumatic cylinder device which can be used for applications in which transmission of the command to the articulated vehicle hydraulic or electrical power steering system occurs mechanically or electronically or electromechanically.

This is achieved with a controlled steering device for the trailers and semi-trailers of tractor trucks with the characteristics described in the main claim.

The dependent claims describe advantageous embodiments of the invention.

According to a particularly advantageous embodiment of the present invention, the pneumatic cylinder device may be applied to any articulated vehicle in production and on the roads, since it does not require any modification to the truck or tractor, nor to the towing pin on the semi-trailer or trailer. According to the invention, it is sufficient to prepare, outside the existing dimensions, a simple bracket on the truck fifth wheel coupling or on the tractor towing hitch and a bracket on the semi-trailer or the trailer.

According to another advantageous embodiment of the invention, the pneumatic cylinder device does not interfere with the manoeuvre for connection and disconnection of the truck or tractor and-the semi-trailer or respectively the trailer, since the device has a quick coupling for connection and disconnection.

The pneumatic cylinder device according to the present invention comprises a single-action pneumatic cylinder which acts as a longitudinally extending and transversally rigid tie rod for the presence of pressurised air, in constant communication with the vehicle's pneumatic circuit.

At the ends of the cylinder, with rotary connections, the end of the rod is attached to the end of a bracket fixed to the fifth wheel coupling or to the towing hitch, and the cylinder base end is attached to an additional pin fixed on the semi-trailer or trailer, so that rotation of the fifth wheel coupling or towing hitch relative to the fifth wheel coupling pin or the towing eye of the drawbar, and so of the truck or tractor relative to the semi-trailer or trailer, produces a corresponding angular movement of the pneumatic cylinder relative to its axis at the cylinder base end, designed to be transformed on the axis into an electrical signal with the application of an angular transducer element or into a corresponding mechanical movement to control the rotary or axial hydraulic distributor directly or indirectly by means of a flexible cable or chain or tie rod or another angular transmission part, etc.

### BRIEF DESCRIPTION OF THE DRAWINGS

Other features and advantages of the invention are evident in the description which follows, with reference to the accompanying drawings, which illustrate a preferred embodiment of the invention without limiting the scope of the inventive concept, and in which:
- Figure 1 is a longitudinal section of the device in accordance with the invention, applied on an articulated vehicle consisting of a truck and semi-trailer;
- Figure la is a schematic plan view of the device, illustrated in Figure 1;
- Figure 1b is an enlarged illustration of the fifth wheel coupling side of Figure 1;
- Figure 1c is an enlarged illustration of the semi-trailer side of Figure 1, the device illustrated in a shortened form to make it easier to understand the most important details;
- Figure 2 is a longitudinal section of the device in accordance with the invention, applied on an articulated vehicle consisting of a tractor and a trailer;
- Figure 2a is a schematic plan view of the device illustrated in Figure 2;
- Figure 3a is a longitudinal partial enlarged section of the fifth wheel coupling side of a variant of the invention applied on an articulated vehicle consisting of a truck and a semi-trailer;
- Figure 3b is a view similar to the view in Figure 3a, of the semi-trailer side;
- Figure 4 to 13 are functional schematic plan views of several embodiments with different uses of a device in accordance with the present invention, in particular on an articulated vehicle comprising a truck or tractor and a semi-trailer or trailer.

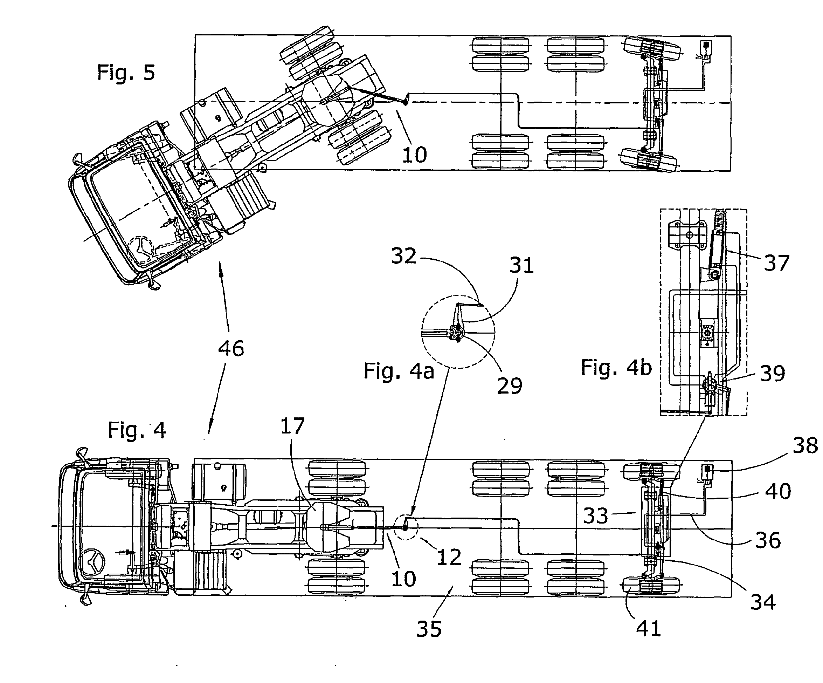

In particular, Figures 4, 6, 8, 10, 12 illustrate -a vehicle equipped with the device disclosed, in a position with the wheels straight; whilst Figures 5, 7, 9, 11, 13 illustrate the corresponding vehicle in a position with the wheels steered.
Moreover, in more detail:
- in Figures 4, 4a, 4b, 5, 6, 6a, 6b, 7 the transmission lever which controls the hydraulic distribution that operates the steering or self-steering axle controlled is positioned on the axis of rotation of the cylinder base, to receive the angular movement generated by rotation of the fifth wheel coupling or the towing hitch relative to the semi-trailer or the trailer;

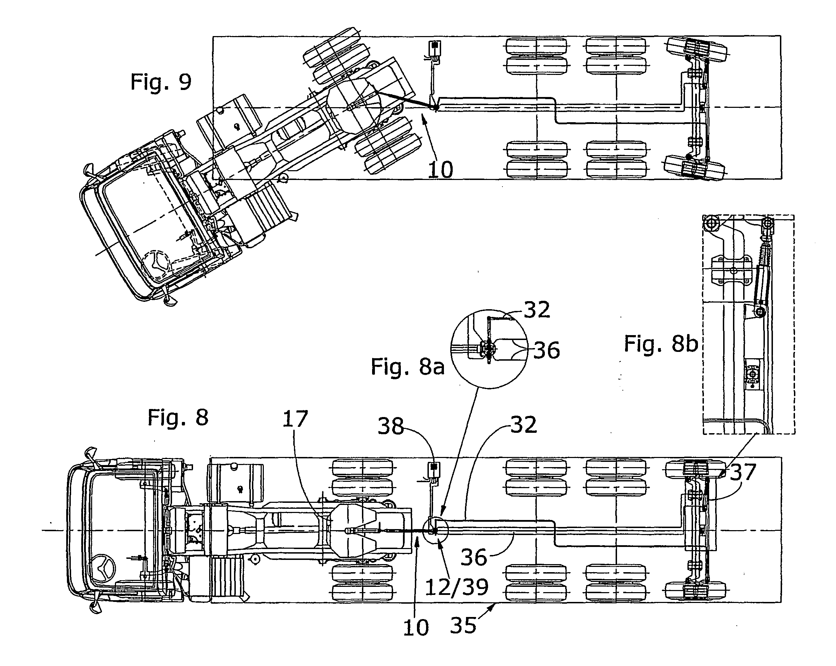

- in Figures 8, 8a, 8b, 9 the rotary hydraulic distributor which operates the steering or self-steering axle controlled is positioned on the axis of rotation of the cylinder base, to receive the angular movement generated by rotation of the fifth wheel coupling relative to the semi-trailer;

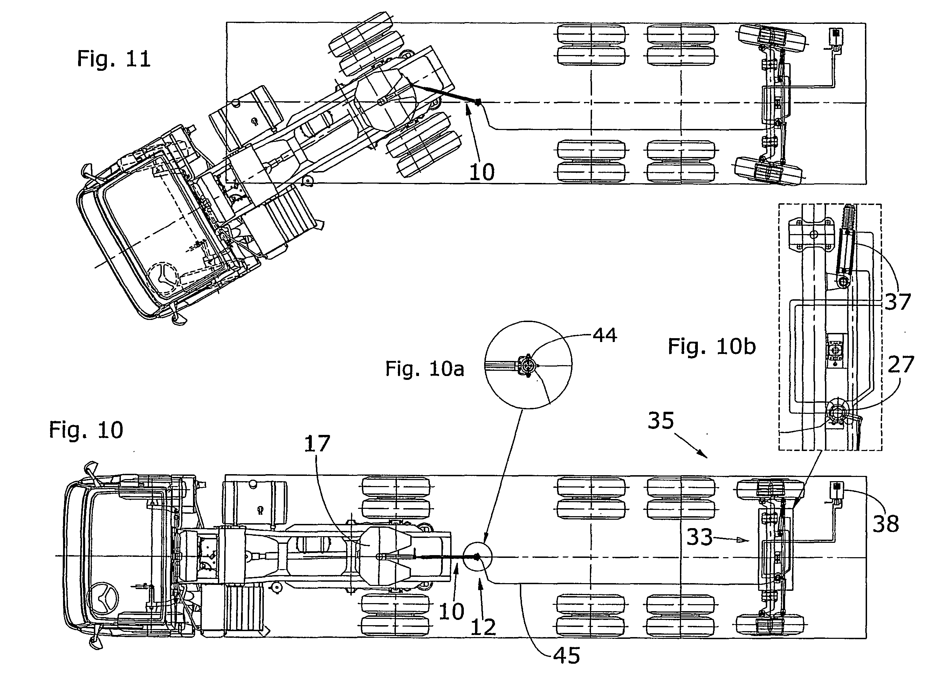

- in Figures 10, 10a, 10b, 11 the angular transducer for controlling the hydraulic distribution which operates the steering or self-steering axle controlled is positioned on the axis of rotation of the cylinder base, to receive the angular movement generated by rotation of the fifth wheel coupling relative to the semi-trailer; and

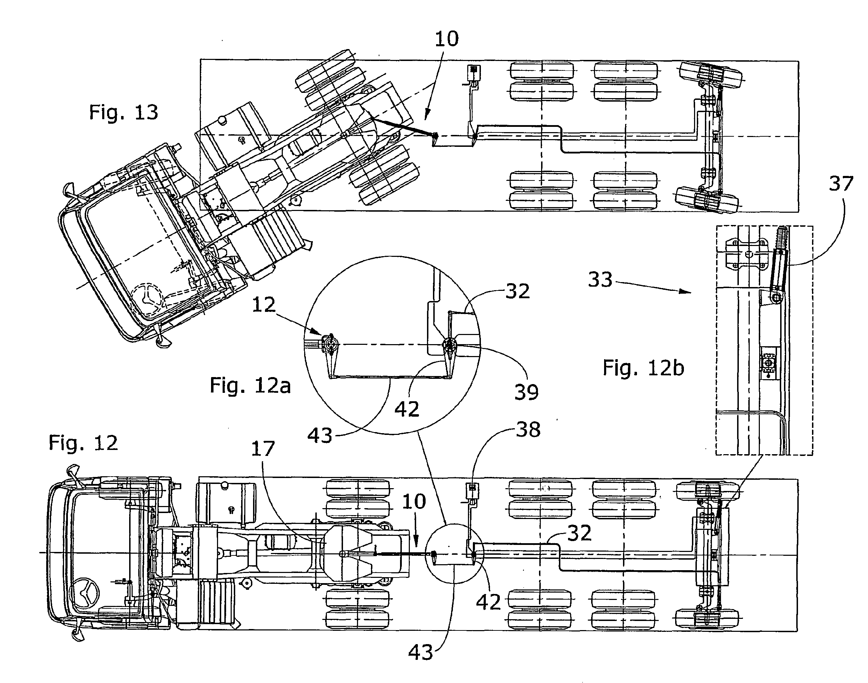

- in Figures 12, 12a, 12b, 13 the transmission lever for rotation of a new axle on which, as required, the transmission lever illustrated in Figures 4 to 7, or the rotary hydraulic distributor illustrated in Figures 8 and 9, or the angular transducer illustrated in Figures 10 and 11 is located, is positioned on the axis of rotation of the cylinder base, to receive the angular movement generated by rotation of the fifth wheel coupling relative to the semi-trailer.

### DETAILED DESCRIPTION OF THE PREFERRED EMBODIMENTS OF THE INVENTION

In the figures, the reference number 10 denotes a device for obtaining power assisted controlled steering of the wheels on the steering or self-steering axle of a semi-trailer or trailer or towed carriage of a truck or tractor for industrial and/or agricultural and/or transport use.

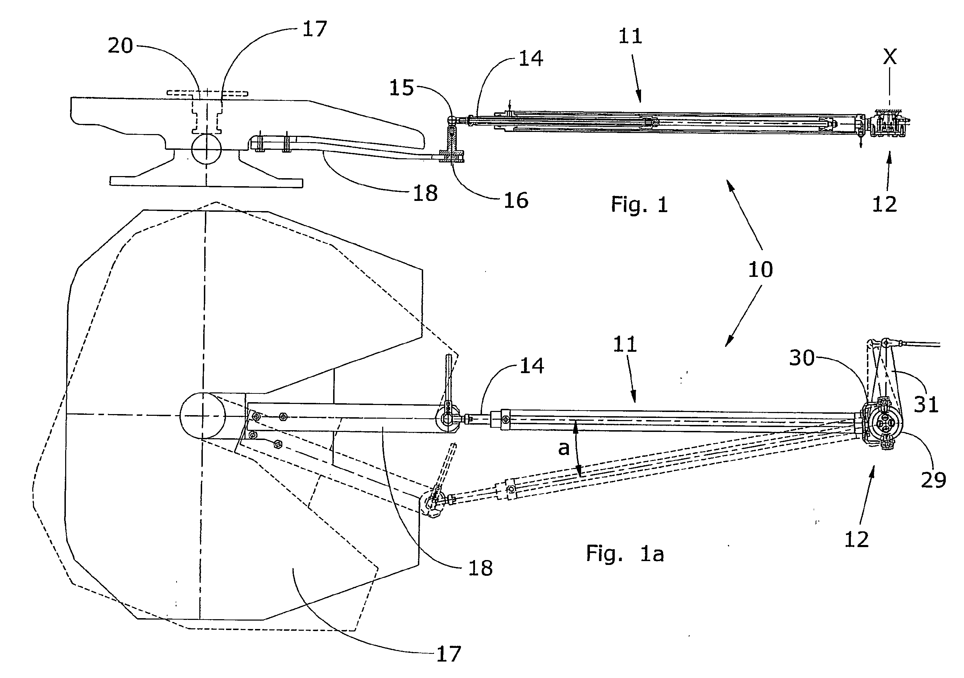

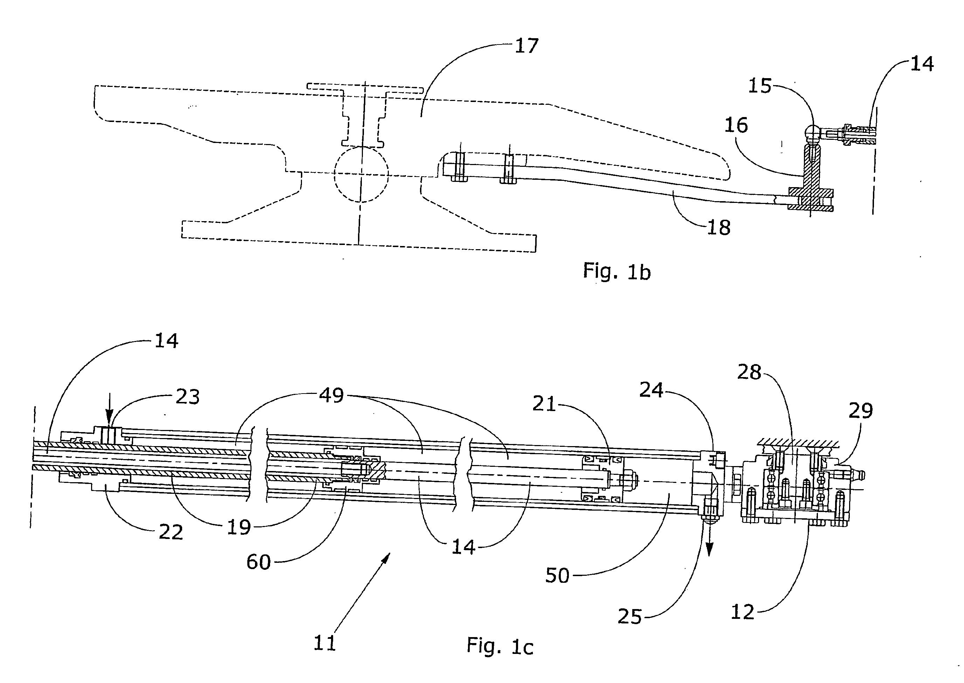

With reference first to Figures 1 and 1a, 1b, 1c it should be noticed that the device 10 consists of a single-action pneumatic cylinder 11 which acts as a longitudinally extending and transversally rigid tie rod for the presence of pressurised air, having a first chamber 49 communicating through a hole 23 with a respective pneumatic circuit acting on a piston 21. The cylinder 11 is closed at one end by a head 22 through which a structure runs, the latter consisting of a first, hollow, external rod 19 in which a second, internal rod 14 runs.

The cylinder 11 also comprises a chamber 50 communicating with the outside through an air bleed hole 25 at the base 24 of the cylinder.

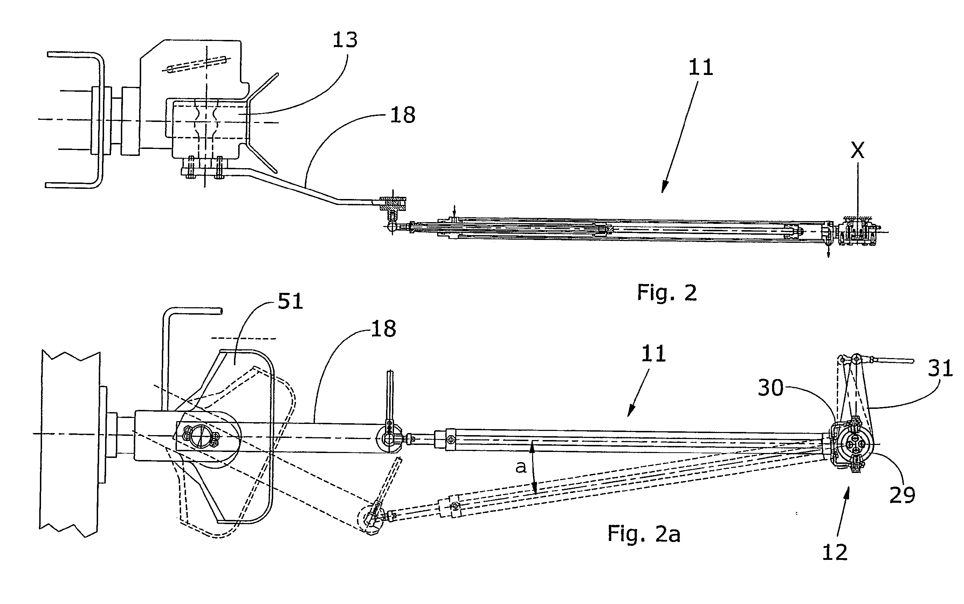

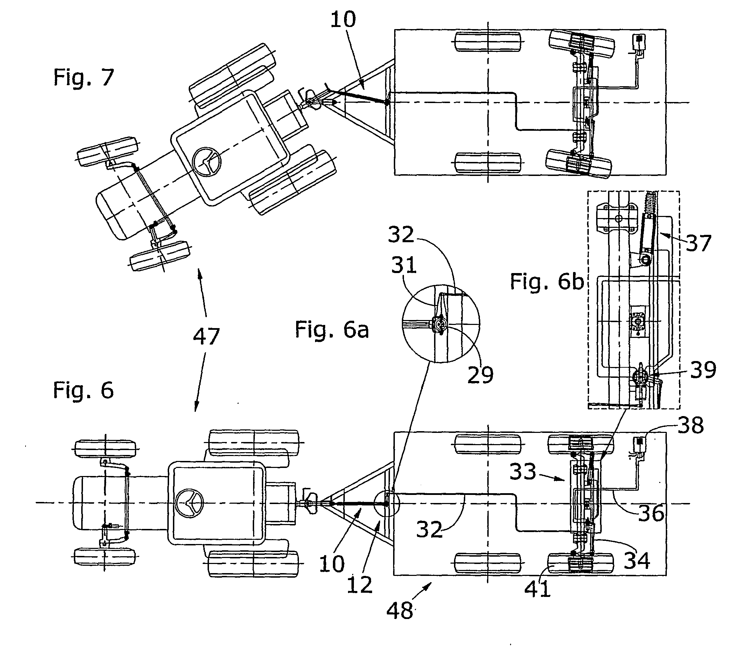

In accordance with an important feature of the invention, the device 10 allows connection with rotary coupling between:
- the end of the rod 14 and the end of a bracket 18 fixed on the fifth wheel coupling 17 (Fig. 1b) or on the towing hitch 51 (Fig. 2a); and
- the cylinder base 24 end and an additional pin 28 fixed on the semi-trailer 35 (Fig. 4) or the trailer 48 (Fig. 6).

A swivel head 15 (Fig. 1b) fixes the end of the internal rod 14 to a quick coupling 16 and allows suitable vertical oscillation between the pneumatic cylinder 11 and the bracket 18 fixed on the fifth wheel coupling or on the towing hitch.

According to a particularly advantageous embodiment of the invention, the pneumatic cylinder 11 incorporates two rods, one inside the other, where the internal rod 14, normally made of high strength steel and allowing slight and useful elastic flexing, is pulled out by the bracket 18 on the fifth wheel coupling 17 or on the towing hitch 51 and in by the pneumatic pressure on the piston 21, to which the rod 14 is connected.

According to the invention, the diameter and length of the two rods are proportional to one another so that the pneumatic pressure in the cylinder 11 chamber 49 keeps them integral and rigid for the entire external rod 19 stroke which corresponds to the part of the angular movement α of the pneumatic cylinder 11 active when steering the wheels 41 on the steering or self-steering axle 34 of the semi-trailer or trailer.

Then (see Figures 1a, 2a), after the external rod 19 has come out completely, the pressure allows the entire remaining outward stroke of the internal rod 14 corresponding to a large angle of rotation α between the truck 46 or the tractor 47 and the semi-trailer 35 or the trailer 48, in which steering of the wheels 41 on the steering or self-steering axle 34 of the semi-trailer or trailer is constantly kept in the maximum steering angle position.

According to the invention, fixed to the two ends of the hollow rigid external rod 19 there are two bushings which guide the internal rod 14. The latter, remaining rigid due to the positive effect of the traction created by the pneumatic pressure, has a small diameter, for example just 8 mm.

This particular feature allows the internal rod 14 to be inserted in limited spaces and so allows the production of a pneumatic cylinder device 10 with a long stroke but extremely compact width and thickness.

According to a particularly advantageous embodiment of the invention (see Figures 1c and 2a), the pneumatic cylinder 11 has a base 24, closing the cylinder at the end opposite the rod outlet, the base being integral with a fork 30 which is connected, with coupling that allows suitable vertical oscillation, to the rotary body 29 of an additional pin 28 fixed on the semi-trailer 35 or on the trailer 48.

The additional pin 28 fixed on the semi-trailer 35 or on the trailer 48 has bearings to support its rotary body 29, to which the following may be fixed, according to different embodiments:
- a transmission lever 31, or
- a rotary hydraulic distributor 39, or'
- an angular transducer 44 for controlling the hydraulic distribution or an electrical actuator for steering the wheels 41 on the steering or self-steering axle 34 of the semi-trailer or trailer.

Rotation of the fifth wheel coupling 17 or of the towing hitch 51 relative to the fifth wheel coupling pin 20 or relative to the drawbar towing eye 13 and so, rotation of the truck 46 or the tractor 47 relative to the semi-trailer 35 or respectively the trailer 48, produces a corresponding angular movement α of the pneumatic cylinder 11 relative to its axis X at the end 12 of the cylinder base 24.

The pneumatic cylinder 11 angular movement α is designed to be transformed on its axis X at the end 12 of the cylinder base 24:
- by application of an angular transducer element 44, into a corresponding electrical signal for controlling the hydraulic distribution 27 which operates steering of the wheels on the steering or self-steering axle 34 of the semi-trailer or trailer, as illustrated in Figures 10, 10a, 10b, 11;
- by application of an angular transmission lever 31, into a corresponding mechanical control movement, using a flexible cable 32 or a chain or tie rod or another angular transmission part 42, etc., for the hydraulic distributor 39 for steering the wheels 41 on the steering or self-steering axle 34 of the semi-trailer or trailer, as illustrated in Figures 4, 4a, 4b, 5, 6, 6a, 6b, 7, 12, 12a, 12b, 13;
- by coaxial application of a rotary hydraulic distributor 39, into a steering action for the wheels 41 on the steering or self-steering axle 34 of the semi-trailer or trailer, as illustrated in Figures 8, 8a, 8b, 9.

The steering unit 33 normally comprises a hydraulic circuit 36 with a double-action linear actuator 37, a pump or electrical pump 38, with oil reservoir, designed to supply the circuit 36 at the required pressure and a hydraulic distributor 39, for example of the rotary type.

The actuator 37 rod 40 is kinematically connected to the lever for rotation of the wheels 41 on the steering or self-steering axle 34.

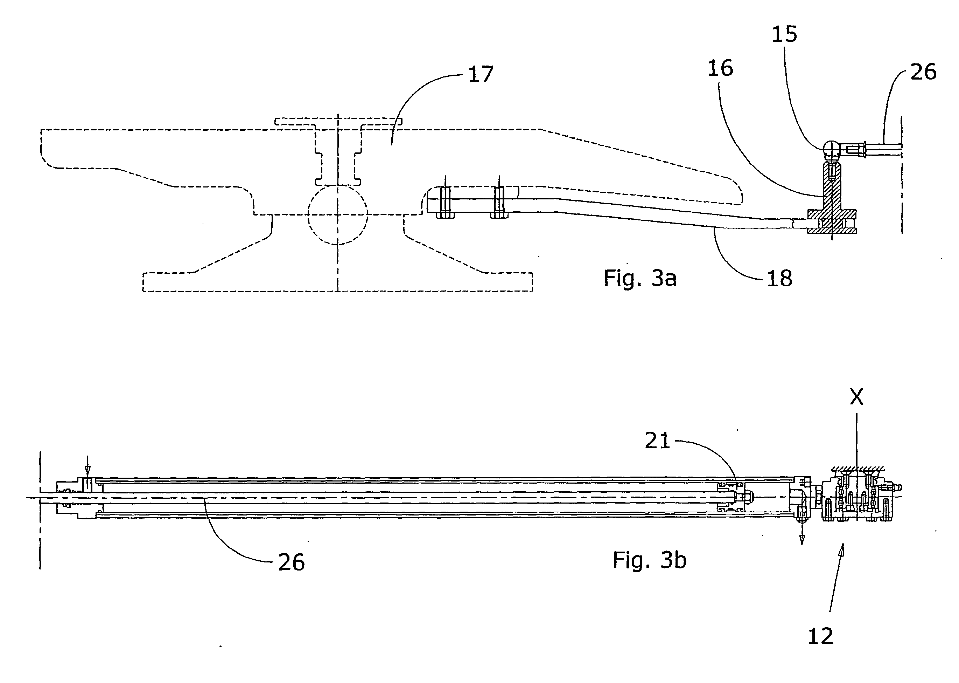

According to an alternative embodiment illustrated in Figures 3a, 3b, particularly for use on agricultural vehicles, when application requirements allow larger dimensions, the device 10 may comprise a cylinder 11 with a single rod 26, with a diameter bigger than that of the above-mentioned internal rod 14.

Said single rod 26, providing greater stiffness, may sometimes allow the supply of pressurised air to be dispensed with.

It should be noticed that the piston 21 is fitted with retaining means so that it can both push and pull the rod 14.

Moreover, the piston 21 has a magnetic ring for controlling magnetic switches positioned outside the cylinder, for checking the angular rotation between the truck 46 and semi-trailer 35 or between the tractor 47 and trailer 48.

Therefore, the device 10 for power assisted controlled steering disclosed achieves all of the preset aims. In particular, it may be applied to any type of tractor and towing vehicle without any modifications to the existing connecting means.

Moreover, thanks to the combination of hydraulic and mechanical or hydraulic and electrical technologies, the device 10 guarantees extreme reliability and readiness, unaffected by the conditions of the working environment.

The invention was described above with reference to several preferred embodiments.

However, obviously the invention may have many other variants which achieve the preset aims, all technically equivalent.

The invention is defined by the appended claims only.

## Claims

1. A pneumatic cylinder device (10) for trailer or semitrailer vehicles which, according to the angle of rotation between the truck (46) and semi-trailer (35) or the tractor (47) and the trailer (48), assumes an angular position which transmits the command for power assisted steering of the wheels on the steering or self-steering axle of the respective semi-trailer (35) or trailer (48), **characterised in that** the pneumatic cylinder (11) is a single-action device and comprises an extended cylindrical body with a head (22) and a base (24), the end of the latter being attached to an additional pin (28) fixed on a semi-trailer (35) or, respectively, on a trailer (48), the cylinder (11) housing a piston (21) which slides along the cylinder and a rod (14; 26) connected to the piston (21), also comprising a supply hole (23) communicating with a circuit designed to supply pressurised air into a first chamber (49) formed between the piston (21) and the head (22), and a second, air bleed hole (25) communicating with a second chamber (50) formed between the piston (21) and the base (24), in which the rod (14; 26) passes through the head (22), the end of the rod (14; 26) being attached, with a rotary connection, to the end of a bracket (18) fixed on a fifth wheel coupling (17) or, respectively, on a towing hitch (51), the rod (14; 26) acting as a longitudinally extending and transversally rigid tie rod for the presence of pressurised air supplied to the inside of the cylinder through the supply hole (23).

2. The device according to claim 1, **characterised in that** the rod (14) runs inside another, hollow rod (19) in turn slidably mounted, using suitable guide means (60).

3. The device according to claim 2, **characterised in that** the other, hollow rod (19) comes out through the head (22).

4. The device (10) according to claim 1, **characterised in that** rotation of the fifth wheel coupling (17) or, respectively, of the towing hitch (51) relative to the fifth wheel coupling pin (20) or, respectively, to the drawbar towing eye (13), and so rotation of the truck (46) or, respectively, the tractor (47) relative to the semi-trailer (35) or, respectively, the trailer (48) produces an angular movement (α) of the pneumatic cylinder (11) relative to its axis (X) at the base (24) end (12).

5. The device (10) according to claim 4, **characterised in that** the angular movement (∝) of the pneumatic cylinder (11) is designed to be transformed, on its axis (X) at the base (24) end (12) by application of an angular transducer element (44), into a corresponding electrical signal for controlling the hydraulic distribution (27) which operates steering of the wheels on the steering or self-steering axle (34) of the semi-trailer or trailer.

6. The device (10) according to any of the claims from 1 to 4, **characterised in that** the angular movement (∝) of the pneumatic cylinder (11) is designed to be transformed, on its axis (X) at the base (24) end (12), by application of an angular transmission lever (31), into a corresponding mechanical control movement, using a flexible cable (32) or a chain or tie rod or another angular transmission part (42) etc., for the hydraulic distributor (39) for steering the wheels (41) on the steering or self-steering axle (34) of the semi-trailer or trailer.

7. The device (10) according to any of the claims from 1 to 4, **characterised in that** the angular movement (α) of the pneumatic cylinder (11) is designed to be transformed on its axis (X) at the base (24) end (12) by coaxial application of a rotary hydraulic distributor (39), into a steering action for the wheels (41) on the steering or self-steering axle (34) of the semi-trailer or trailer.

8. The device (10) according to any of the foregoing claims, **characterised in that** the it controls a steering unit (33) comprising a hydraulic circuit (36) with a pump or electrical pump (38) with oil reservoir, a distributor (39) and a double-action hydraulic linear actuator (37).

9. The device (10) according to any of the foregoing claims, **characterised in that** the bracket (18) is fixed on the fifth wheel coupling (17) or on the respective towing hitch (51) in a position such that it does not obstruct disconnection.of the truck (46) or the tractor (47) from the semi-trailer (35) or the trailer (48) and **characterised in that** all of the remaining part is positioned on the semi-trailer or trailer on which it is installed, not only the axle controlled (34) but also all the remaining hydraulic steering circuit.

10. The device (10) according to the foregoing claims, **characterised in that** it comprises a quick coupling (16) for connection and disconnection of the pneumatic cylinder (11) and the bracket (18) fixed on the fifth wheel coupling (17) or on the respective towing hitch (51).

11. The device (10) according to claim 10, **characterised in that** it has a swivel head (15) which secures the end of the internal rod (14) to the quick coupling (16), allowing suitable vertical oscillation between the pneumatic cylinder (11) arid the bracket (18) fixed on the fifth wheel coupling or on the respective towing hitch.

12. The device (10) according to any of the claims from 2 to 11, **characterised in that** the internal rod (14), made of high strength steel with elasticity allowing slight and useful elastic flexing, is pulled out by the bracket (18) on the fifth wheel coupling (17) or on the respective towing hitch (51), and in by the pneumatic pressure on the piston (21), to which the rod (14) is connected, the diameter and length of the two rods being proportional to one another so that the pneumatic pressure in the cylinder (11) chamber (49) keeps them integral and rigid for the entire external rod (19) stroke which corresponds to the part of the angular movement (∝) of the pneumatic cylinder (11) active when steering the wheels (41) on the steering or self-steering axle (34) of the semi-trailer or trailer, and **characterised in that** after the external rod (19) has come out completely, the pressure allows the entire remaining internal rod (14) outward stroke, corresponding to a large angle of rotation (α) between the truck (46) or, respectively, the tractor (47) and the semi-trailer (35) or, respectively, the trailer (48), in which steering of the wheels (41) on the steering or self-steering axle (34) of the semi-trailer or trailer is constantly kept in the maximum steering angle position.

13. The device (10) according to any of the claims from 2 to 12, **characterised in that** there are two bushings fixed to the two ends of the hollow rigid external rod (19), for guiding the internal rod (14).

14. The device (10) according to any of the claims from 2 to 13, **characterised in that** the base (24) is integral with the fork (30) which is connected, with coupling that allows suitable vertical oscillation, to the rotary body (29) of the additional pin (28) fixed on the semi-trailer (35) or, respectively, on the trailer (48).

15. The device (10) according to any of the foregoing claims, **characterised in that** the additional pin (28) fixed on the semi-trailer (35) or on the trailer (48) has bearings to support its rotary body (29) to which the following are fixed:
• a transmission lever (31); or
• a rotary hydraulic distributor (39); or
• an angular transducer (44) for controlling the
• hydraulic distribution or an electrical actuator for steering the wheels (41) on the steering or self-steering axle (34) of the semi-trailer or trailer.

16. The device (10) according to any of the foregoing claims, **characterised in that** it comprises a single rod (26) pulled out by the bracket (18) on the fifth wheel coupling (17) or on the towing hitch (51) and in by the pneumatic pressure on its piston.

17. The device (10) according to claim 16, **characterised in that** it comprises a single rod (26) pulled out and pushed in by the bracket (18) on the fifth wheel coupling (17) or on the towing hitch (51).

18. The device (10) according to the foregoing claims, **characterised in that** the piston (21) is fitted with retaining means so that it can both push and pull the rod (14).

19. The device (10) according to the foregoing claims, **characterised in that** the piston (21) has a magnetic ring for controlling magnetic switches positioned outside the cylinder, for checking the angular rotation between the truck (46) and the semi-trailer (35) or between the tractor (47) and the trailer (48).

## Patentansprüche

1. Pneumatische Zylindervorrichtung (10) für Fahrzeuge mit Anhänger oder Sattelanhänger, die, in Übereinstimmung mit dem Drehwinkel zwischen dem Lastwagen (46) und dem Sattelanhänger (35) oder zwischen dem Traktor (47) und dem Anhänger (48), eine Winkelposition einnimmt, und die den Befehl für eine Servolenkung der Räder auf die Lenkachse oder Selbstlenkachse des jeweiligen Sattelanhängers (35) oder Anhängers (48) überträgt, **dadurch gekennzeichnet, dass** der pneumatische Zylinder (11) eine Einfachaktionseinrichtung ist und einen verlängerten zylindrischen Körper mit einem Kopf (22) und mit einer Basis (24) aufweist, wobei das Ende der Basis an einem zusätzlichen Zapfen (28) angebracht ist, der jeweils an einem Sattelanhänger (35) oder an einem Anhänger (48) befestigt ist, und wobei der Zylinder (11) einen Kolben (21) aufnimmt, der entlang des Zylinders gleitet, sowie eine Stange (14; 26) vorgesehen ist, die mit dem Kolben (21) verbunden ist, wobei eine Zuführöffnung (23) vorgesehen ist, die mit einem Kreislauf in Verbindung steht, der unter Druck stehende Luft einer ersten Kammer (49) zuführt, die zwischen dem Kolben (21) und dem Kopf (22) ausgebildet ist, sowie eine zweite Luftablass-Öffnung (25) vorgesehen ist, die mit einer zweiten Kammer (50) in Verbindung steht, die zwischen dem Kolben (21) und der Basis (24) ausgebildet ist, und wobei die Stange (14; 26) durch den Kopf (22) hindurch verläuft, wobei das Ende der Stange (14; 26) mit einer Drehverbindung am Ende eines Trägers (18) angebracht ist, der wiederum an einer Sattelkupplung (17) oder an einer Abschleppkupplung (51) befestigt ist, wobei die Stange (14; 26) als eine in Längsrichtung ausfahrbare und in Querrichtung starre Zugstange wirkt, und zwar infolge des Vorhandenseins der Druckluft, die in das Innere des Zylinders durch die Zuführöffnung (23) eingeleitet wird.

2. Vorrichtung nach Anspruch 1, **dadurch gekennzeichnet, dass** die Stange (14) innerhalb einer weiteren, hohlen Stange (19) verläuft, die ihrerseits verschiebbar montiert ist, indem geeignete Führungsmittel (60) benutzt werden.

3. Vorrichtung nach Anspruch 2, **dadurch gekennzeichnet, dass** die weitere, hohle Stange (19) durch den Kopf (22) hindurch nach außen tritt.

4. Vorrichtung (10) nach Anspruch 1, **dadurch gekennzeichnet, dass** jeweils die Rotation der Sattelkupplung (17) oder der Abschleppkupplung (51) relativ zu dem Bolzen (20) der Sattelkupplung oder relativ zu dem Zugdeichselauge (13), sowie somit jeweils die Drehung des Lastwagens (46) oder des Traktors (47) relativ zu dem Sattelanhänger (35) oder dem Anhänger (48) eine Winkelbewegung (α) des pneumatischen Zylinders (11) relativ zu dessen Achse (X) an der Basis (24) am Ende (12) erzeugt.

5. Vorrichtung (10) nach Anspruch 4, **dadurch gekennzeichnet dass** die Winkelbewegung (α) des pneumatischen Zylinders (11) derart erfolgt, dass diese an seiner Achse (X) an der Basis (24) am Ende (12) durch Einsatz eines Winkelsignalgeberelements (44) derart transformiert wird, dass ein korrespondierendes elektrisches Signal zum Kontrollieren der hydraulischen Verteilung (27) erzeugt wird, die das Lenken der Räder an der Lenkachse oder der Selbstlenkachse (34) des Sattelanhängers oder des Anhängers steuert.

6. Vorrichtung (10) nach irgendeinem der Ansprüche 1 bis 4, **dadurch gekennzeichnet, dass** die Winkelbewegung (α) des pneumatischen Zylinders (11) derart erfolgt, dass diese an seiner Achse (X) an der Basis (24) am Ende (12) durch Einsatz eines Winkelübertragungshebels (31) derart übertragen wird, dass eine korrespondierende mechanische Kontrollverlagerung erzeugt wird, indem ein flexibles Kabel (32) oder eine Kette oder eine Zugstange oder ein anderes Winkelübertragungsteil (42) usw. benutzt wird, damit die hydraulische Verteilung (39) die Räder (41) an der Lenkachse oder der Selbstlenkachse (34) des Sattelanhängers oder des Anhängers lenkt.

7. Vorrichtung (10) nach einem der Ansprüche 1 bis 4, **dadurch gekennzeichnet, dass** die Winkelbewegung (α) des pneumatischen Zylinders (11) derart erfolgt, dass diese an seiner Achse (X) an der Basis (24) am Ende (12) durch koaxialen Einsatz eines Rotationshydraulikverteilers (39) übertragen wird, nämlich in eine Lenkaktion der Räder (41) an der Lenkachse oder der Selbstlenkachse (34) des Sattelanhängers oder des Anhängers.

8. Vorrichtung (10) nach irgendeinem der vorherigen Ansprüche, **dadurch gekennzeichnet, dass** diese eine Lenkeinheit (33) kontrolliert, umfassend einen hydraulischen Kreis (36) mit einer Pumpe oder mit einer elektrischen Pumpe (38), mit einem Ölreservoir, mit einem Verteiler (39) und mit einem linearen doppeltwirkenden Hydraulikaktuator (37).

9. Vorrichtung (10) nach irgendeinem der vorherigen Ansprüche, **dadurch gekennzeichnet, dass** der Träger (18) jeweils an der Sattelkupplung (17) oder an der Anhängerkupplung (51) befestigt ist, an einer derartigen Position, dass er das Abkoppeln des Lastwagens (46) oder des Traktors (47) von dem Sattelanhänger (35) oder von dem Anhänger (48) nicht behindert, und **dadurch gekennzeichnet, dass** alle verbleibenden Teile an dem Sattelanhänger oder an dem Anhänger positioniert sind, an dem sie installiert sind, nicht nur die kontrollierte Achse (34), sondern auch alle restlichen hydraulischen Lenkkreise.

10. Vorrichtung (10) nach den vorherigen Ansprüchen, **dadurch gekennzeichnet, dass** diese eine Schnellkupplung (16) umfasst, zum Ankoppeln und zum Abkoppeln des pneumatischen Zylinders (11) und des Trägers (18), der jeweils an der Sattelkupplung (17) oder an der Anhängerkupplung (51) fixiert ist.

11. Vorrichtung (10) nach Anspruch 10, **dadurch gekennzeichnet, dass** diese einen Schwenkkopf (15) aufweist, der das Ende der innenliegenden Stange (14) an der Schnellkupplung (16) sichert, so dass eine geeignete vertikale Oszillation zwischen dem pneumatischen Zylinder (11) und dem Träger (18) ermöglicht ist, der wiederum an der Sattelkupplung oder an der Anhängerkupplung befestigt ist.

12. Vorrichtung (10) nach irgendeinem der vorherigen Ansprüche 2 bis 11, **dadurch gekennzeichnet, dass** die innenliegende Stange (14), die aus hochfestem Stahl mit einer Elastizität hergestellt ist, die eine leichte und nützliche elastische Biegung erlaubt, durch jeweils den Träger (18) an der Sattelkupplung (17) oder durch den Träger (18) an der Abschleppkupplung (51) nach außen gezogen wird, sowie nach innen verlagert wird, durch den pneumatischen Druck auf den Kolben (21), mit dem die Stange (14) verbunden ist, wobei der Durchmesser und die Länge der beiden Stangen zueinander proportional sind, so dass der pneumatische Druck in der Kammer (49) des Zylinders (11) diese aneinander fest zusammen hält, für den gesamten Hub der außenliegenden Stange (19), was wiederum dem Teil der Winkelbewegung (α) des pneumatischen Zylinders (11) entspricht, der aktiv ist, wenn die Räder (41) an der Lenkachse oder der Selbstlenkachse (34) des Sattelanhängers oder des Anhängers gelenkt werden, und **dadurch gekennzeichnet, dass**, nachdem die äußere Stange (19) vollständig nach außen verlagert worden ist, der Druck den vollständigen restlichen Außwärtshub der innenliegenden Stange (14) ermöglicht, korrespondierend einem großen Rotationswinkel (α) jeweils zwischen dem Lastwagen (4) oder dem Traktor (47) und dem Sattelanhänger (35) oder dem Anhänger (48), wobei das Lenken der Räder (41) an der Lenkachse oder der Selbstlenkachse (34) des Sattelanhängers oder des Anhängers konstant in der Maximallenkwinkelposition gehalten wird.

13. Vorrichtung (10) nach irgendeinem der vorherigen Ansprüche 2 bis 12, **dadurch gekennzeichnet, dass** zwei Buchsen vorgesehen sind, die an den beiden Enden der hohlen starren äußeren Stange (19) befestigt sind, um die innenliegende Stange (14) zu führen.

14. Vorrichtung (10) nach irgendeinem der vorherigen Ansprüche 2 bis 13, **dadurch gekennzeichnet, dass** die Basis (24) einstückig mit der Gabel (30) ausgebildet ist, die wiederum mit einer Kupplung mit dem Drehkörper (29) des zusätzlichen Bolzens (28) verbunden ist, wobei die Kupplung eine geeignete vertikale Oszillation erlaubt, und wobei der Bolzen jeweils an dem Sattelanhänger (35) oder dem Anhänger (48) fixiert ist.

15. Vorrichtung (10) nach irgendeinem der vorherigen Ansprüche, **dadurch gekennzeichnet, dass** der zusätzliche Bolzen (28), der an dem Sattelanhänger (35) oder an dem Anhänger (48) befestigt ist, Lagerungen aufweist, um den Drehkörper (29) abzustützen, an dem das Folgende befestigt ist:
- ein Übertragungshebel (31); oder
- ein Rotationshydraulikverteiler (39); oder
- ein Winkelsignalgeberelement (44), um die hydraulische Verteilung zu kontrollieren oder ein elektrischer Aktuator, der die Räder (41) an der Lenkachse oder an der Selbstlenkachse (34) des Sattelanhängers oder des Anhängers lenkt.

16. Vorrichtung (10) nach irgendeinem der vorherigen Ansprüche, **dadurch gekennzeichnet, dass** diese eine einzelne Stange (26) aufweist, die durch den Träger (18) an der Sattelkupplung (17) oder an der Anhängerkupplung (51) herausgezogen wird, und die durch den pneumatischen Druck auf ihren Kolben nach innen verlagert wird.

17. Vorrichtung (10) nach Anspruch 16, **dadurch gekennzeichnet, dass** diese eine einzelne Stange (26) aufweist, die durch den Träger (18) an der Sattelkupplung (17) oder an der Anhängerkupplung (51) herausgezogen wird und nach innen gedrückt wird.

18. Vorrichtung (10) nach den vorherigen Ansprüchen, **dadurch gekennzeichnet, dass** der Kolben (21) mit Haltemitteln versehen ist, so dass er die Stange (14) sowohl mit Druck als auch mit Zug beaufschlagen kann.

19. Vorrichtung (10) nach irgendeinem der vorherigen Ansprüche, **dadurch gekennzeichnet, dass** der Kolben (21) einen magnetischen Ring aufweist, um magnetische Schalter zu kontrollieren, die außerhalb des Zylinders angeordnet sind, um die Drehbewegung zwischen dem Lastwagen (46) und dem Sattelanhänger (35) oder zwischen dem Traktor (47) und dem Anhänger (48) zu überprüfen

## Revendications

1. Dispositif à vérin pneumatique (10) pour véhicules à remorque ou semi-remorque qui, selon l'angle de rotation entre le camion (46) et la semi-remorque (35) ou le tracteur (47) et la remorque (48), prend une position angulaire qui transmet la commande de direction assistée des roues sur l'essieu de direction ou l'essieu de direction automatique de la semi-remorque (35) ou de la remorque (48) respectivement, **caractérisé en ce que** le vérin pneumatique (11) est un dispositif simple effet et comprend un corps cylindrique étendu avec une tête (22) et un socle (24), l'extrémité de ce dernier étant fixée à une goupille supplémentaire (28) fixée sur une semi-remorque (35) ou, respectivement, sur une remorque (48), le vérin (11) logeant un piston (21) coulissant le long du vérin et une tige (14; 26) connectée au piston (21), comprenant également un trou d'alimentation (23) communiquant avec un circuit conçu pour injecter de l'air sous pression dans une première chambre (49) constituée entre le piston (21) et la tête (22), et un second trou de purge d'air (25) communiquant avec une seconde chambre (50) constituée entre le piston (21) et le socle (24), dans lequel la tige (14; 26) passe à travers la tête (22), l'extrémité de la tige (14; 26) étant fixée, à l'aide d'une connexion rotative, à l'extrémité d'un support (18) fixé sur un accouplement de cinquième roue (17) ou, respectivement, sur un crochet de remorque (51), la tige (14; 26) faisant office de barre de connexion rigide transversale et s'étendant longitudinalement pour assurer la présence d'air sous pression à l'intérieur du vérin par le biais du trou d'alimentation (23).

2. Dispositif selon la revendication 1, **caractérisé en ce que** la tige (14) passe à l'intérieur d'une autre tige, creuse (19) montée à son tour coulissante, à l'aide d'un moyen de guidage approprié (60).

3. Dispositif selon la revendication 2, **caractérisé en ce que** l'autre tige, creuse (19) sort par la tête (22).

4. Dispositif (10) selon la revendication 1, **caractérisé en ce que** la rotation de l'accouplement de cinquième roue (17) ou, respectivement, du crochet de remorque (51) par rapport à la goupille de cinquième accouplement de roue (20) ou, respectivement, à l'oeillet de remorque pour barre de traction (13), et de sorte que la rotation du camion (46) ou, respectivement, du tracteur (47) par rapport à la semi-remorque (35) ou, respectivement, de la remorque (48) produise un mouvement angulaire (α) du vérin pneumatique (11) par rapport à son axe (X) au niveau de l'extrémité (12) du socle (24).

5. Dispositif (10) selon la revendication 4, **caractérisé en ce que** le mouvement angulaire (α) du vérin pneumatique (11) est conçu pour être transformé, sur son axe (X) au niveau de l'extrémité (12) du socle (24) par application d'un élément capteur angulaire (44), en un signal électrique correspondant permettant de commander la distribution hydraulique (27) qui actionne la direction des roues au niveau de l'essieu de direction simple ou de direction automatique (34) de la semi-remorque ou de la remorque.

6. Dispositif (10) selon l'une quelconque des revendications 1 à 4, **caractérisé en ce que** le mouvement angulaire (α) du vérin pneumatique (11) est conçu pour être transformé, sur son axe (X) au niveau de l'extrémité (12) du socle (24), par application d'un levier de transmission angulaire (31), en un mouvement de commande mécanique correspondant, à l'aide d'un câble flexible (32) ou d'une chaîne ou d'une tige de connexion ou d'une autre pièce de transmission angulaire (42) etc., pour le distributeur hydraulique (39) afin de diriger les roues (41) sur l'essieu de direction ou l'essieu de direction automatique (34) de la semi-remorque ou de la remorque.

7. Dispositif (10) selon l'une quelconque des revendications 1 à 4, **caractérisé en ce que** le mouvement angulaire (α) du vérin pneumatique (11) est conçu pour être transformé sur son axe (X) au niveau de l'extrémité (12) du socle (24) par application coaxiale d'un distributeur hydraulique rotatif (39), en une action de direction des roues (41) sur l'essieu de direction ou de l'essieu de direction automatique (34) de la semi-remorque ou de la remorque.

8. Dispositif (10) selon l'une quelconque des revendications précédentes, **caractérisé en ce qu'**il commande une unité de direction (33) comprenant un circuit hydraulique (36) avec une pompe manuelle ou une pompe électrique (38) avec un réservoir d'huile, un distributeur (39) et un actionneur linéaire hydraulique double effet (37).

9. Dispositif (10) selon l'une quelconque des revendications précédentes, **caractérisé en ce que** le support (18) est fixé sur l'accouplement de cinquième roue (17) ou sur le crochet de remorque respectif (51) dans une position telle qu'il ne compromet pas le désengagement du camion (46) ou du tracteur (47) depuis la semi-remorque (35) ou depuis la remorque (48) et **caractérisé en ce que** toute la partie restante soit positionnée sur la semi-remorque ou la remorque sur laquelle elle est installée, non seulement l'essieu commandé (34) mais également tout le reste du circuit de direction hydraulique.

10. Dispositif (10) selon l'une des revendications précédentes, **caractérisé en ce qu'**il comprend un accouplement à fermeture rapide (16) pour connecter et déconnecter le vérin pneumatique (11) et le support (18) fixés sur l'accouplement de cinquième roue (17) ou sur le crochet de remorque respectif (51).

11. Dispositif (10) selon la revendication 10, **caractérisé en ce qu'**il possède une tête pivotante (15) fixant l'extrémité de la tige interne (14) à l'accouplement à fermeture rapide (16), permettant une oscillation verticale appropriée entre le vérin pneumatique (11) et le support (18) fixé sur l'accouplement de cinquième roue ou le crochet de remorque respectif.

12. Dispositif (10) selon l'une quelconque des revendications 2 à 11, **caractérisé en ce que** la tige interne (14), faite en acier de grande résistance avec une élasticité permettant une flexion légère et élastique utile, est tirée vers l'extérieur par le support (18) sur l'accouplement de cinquième roue (17) ou sur le crochet de remorque respectif (51), et vers l'intérieur par la pression pneumatique sur le piston (21), auquel la tige (14) est connectée, le diamètre et la longueur des deux tiges étant proportionnels l'un à l'autre de sorte que la pression pneumatique dans la chambre (49) du vérin (11) les maintient solidaires et rigides pour toute la course de la tige externe (19) correspondant à la partie active du mouvement angulaire (α) du vérin pneumatique (11) pendant la direction des roues (41) sur l'essieu de direction ou l'essieu de direction automatique (34) de la semi-remorque ou de la remorque, et **caractérisé en ce qu'**une fois que la tige externe (19) est sortie complètement, la pression permet à tout le reste de la tige interne (14) de se déployer, correspondant à un grand angle de rotation (α) entre le camion (46) ou, respectivement, le tracteur (47) et la semi-remorque (35) ou, respectivement, la remorque (48), dans lequel la direction des roues (41) sur l'essieu de direction ou l'essieu de direction automatique (34) de la semi-remorque ou de la remorque est maintenue constante dans la position angulaire de direction maximale.

13. Dispositif (10) selon l'une quelconque des revendications 2 à 12, **caractérisé en ce qu'**il existe deux douilles fixées aux deux extrémités de la tige externe rigide creuse (19), afin de guider la tige interne (14).

14. Dispositif (10) selon l'une quelconque des revendications 2 à 13, **caractérisé en ce que** le socle (24) est solidaire de la fourche (30) qui est connectée, par accouplement permettant une oscillation verticale appropriée, par rapport au corps rotatif (29) de la goupille supplémentaire (28) fixée sur la semi-remorque (35) ou, respectivement, sur la remorque (48).

15. Dispositif (10) selon l'une quelconque des revendications précédentes, **caractérisé en ce que** la goupille supplémentaire (28) fixée sur la semi-remorque (35) ou sur la remorque (48) présente des paliers pour supporter son corps rotatif (29) auquel sont fixés les éléments suivants :
• un levier de transmission (31) ; ou
• un distributeur hydraulique rotatif (39); ou
• un capteur angulaire (44) permettant de commander la distribution hydraulique ou un actionneur électrique pour assurer la direction des roues (41) sur l'essieu de direction ou l'essieu de direction automatique (34) de la semi-remorque ou de la remorque.

16. Dispositif (10) selon l'une quelconque des revendications précédentes, **caractérisé en ce qu'**il comprend une simple tige (26) tirée vers l'extérieur par le support (18) sur l'accouplement de cinquième roue (17) ou bien sur le crochet de remorque (51) et vers l'intérieur par la pression pneumatique exercée sur son piston.

17. Dispositif (10) selon la revendication 16, **caractérisé en ce qu'**il comprend une simple tige (26) tirée et rentrée par le support (18) sur l'accouplement de cinquième roue (17) ou sur le crochet de remorque (51).

18. Dispositif (10) selon les revendications précédentes, **caractérisé en ce que** le piston (21) est équipé de moyens de retenue de sorte qu'il peut à la fois faire sortir et rentrer la tige (14).

19. Dispositif (10) selon les revendications précédentes, **caractérisé en ce que** le piston (21) possède une bague magnétique permettant de commander les interrupteurs magnétiques positionnés à l'extérieur du vérin, permettant de vérifier la rotation angulaire entre le camion (46) et la semi-remorque (35) ou bien entre le tracteur (47) et la remorque (48).
